# EUROPÄISCHE PATENTANMELDUNG

(11) **EP 2 461 560 A2**
(43) Veröffentlichungstag der Anmeldung: **06.06.2012**
(21) Anmeldenummer: 11008398.7
(22) Anmeldetag: 19.10.2011
(51) Int. Cl.: H04M 11/02

(54) **Zentraleinheit eines Türkommunikationssystems**

(30) Priorität: 02.12.2010 DE 102010053292
(71) Anmelder: ABB AG, 68309 Mannheim (DE)
(72) Erfinder: Bigalke, Olaf, 58638 Iserlohn (DE); Platte, Jörg, 44149 Dortmund (DE); Kruppa, Christian, 44649 Herne (DE); Zapp, Robert, 58579 Schalksmühle (DE); Schramm, Peter, 44269 Dortmund (DE)

(57) **Zusammenfassung**

Es wird eine Zentraleinheit (1) eines Türkommunikationssystems vorgeschlagen,
• mit einem Türkommunikationssystem-Interface (2) zum Anschluss von Geräten (9, 11) des Türkommunikationssystems, wie mindestens einer Türstation (9) und mindestens einer Wohnungsstation (11), über einen Türkommunikationssystem-Bus (6),
• mit einem Gebäudesystemtechnik-Interface (3) zum Anschluss von Geräten (16, 18, 21, 22) der Gebäudesystemtechnik, wie Aktoren und/oder Sensoren, über einen Gebäudesystemtechnik-Bus (7),
• mit einer sowohl mit dem Türkommunikationssystem-Interface (2) als auch mit dem Gebäudesystemtechnik-Interface (3) verbundenen programmierbaren Auswertelogik (4),
• und mit einem mit der programmierbaren Auswertelogik (4) verbundenen Programmier-Interface (5),
• wobei die programmierbare Auswertelogik (4) eigenständig Steuer- und Schaltfunktionen vornimmt und
• in der einen Richtung von Geräten (9, 11) des Türkommunikationssystems ausgelöste Ereignisse umsetzt in Schalt- und/oder Steuerfunktionen, welche von Geräten (16, 18, 21, 22) der Gebäudesystemtechnik, insbesondere Aktoren, auszuführen sind,
• in der entgegengesetzten Richtung von Geräten (16, 18, 21, 22) der Gebäudesystemtechnik, insbesondere von Sensoren, ausgelöste Ereignisse umsetzt in Schalt- und/oder Steuerfunktionen, welche von Geräten (9, 11) des Türkommunikationssystems auszuführen sind.

## Beschreibung

Die Erfindung betrifft eine Zentraleinheit eines Türkommunikationssystems.

Aus der DE 102 54 273 B4 ist ein Verfahren zur Steuerung einer Türsprechanlage bekannt, wobei eine Türstation ein Steuersignal über ein Netzgerät an ein Wohntelefon überträgt, wobei das Netzgerät oder eine dem Netzgerät zugeordnete Schalteinheit das Steuersignal in ein KNX-EIB-Signal eines Gebäudebussystems wandelt und dieses an das Wohntelefon über einen Busankoppler überträgt. Das Wohntelefon oder eine dem Wohntelefon zugeordnete Schalteinheit nimmt das KNX-EIB-Signal aus dem Gebäudebussystem mittels eines Busankopplers auf. Das Wohntelefon kann mittels eines Mikrokontrollers ein KNX-EIB-Signal erzeugen und über den Busankoppler auf das Gebäudebussystem aufschalten, woraufhin das Netzgerät nach Aufnahme dieses KNX-EIB-Signals die Sprachübertragung zwischen der Türstation und dem Wohntelefon freischaltet. Bei einer Ausführungsform einer Türsprechanlage mit einer Türstation, einem Netzgerät und wenigstens einem Wohntelefon steht die Türstation über eine Anschlussleitung mit dem Netzgerät in Verbindung und das Wohntelefon ist mit dem Netzgerät verdrahtet. Das Netzgerät und/oder das Wohntelefon weisen jeweils einen KNX-EIB-Busankoppler auf, an den ein Gebäudebussystem anschließbar ist. Alternativ oder zusätzlich weist eine dem Netzgerät und/oder dem Wohntelefon zugeordnete Schalteinheit diesen Busankoppler auf.

Der Erfindung liegt die Aufgabe zugrunde, eine optimierte Zentraleinheit eines Türkommunikationssystems anzugeben, welche zusätzlich mit der Gebäudesystemtechnik verknüpft werden kann.

Diese Aufgabe wird erfindungsgemäß gelöst durch eine Zentraleinheit eines Türkommunikationssystems,
- mit einem Türkommunikationssystem-Interface zum Anschluss von Geräten des Türkommunikationssystems, wie mindestens einer Türstation und mindestens einer Wohnungsstation, über einen Türkommunikationssystem-Bus,
- mit einem Gebäudesystemtechnik-Interface zum Anschluss von Geräten der Gebäudesystemtechnik, wie Aktoren und/oder Sensoren, über einen Gebäudesystemtechnik-Bus,
- mit einer sowohl mit dem Türkommunikationssystem-Interface als auch mit dem Gebäudesystemtechnik-Interface verbundenen programmierbaren Auswertelogik,
- und mit einem mit der programmierbaren Auswertelogik verbundenen Programmier-Interface,
- wobei die programmierbare Auswertelogik eigenständig Steuer- und Schaltfunktionen vornimmt und
- in der einen Richtung von Geräten des Türkommunikationssystems ausgelöste Ereignisse umsetzt in Schalt- und/oder Steuerfunktionen, welche von Geräten der Gebäudesystemtechnik, insbesondere Aktoren, auszuführen sind,
- in der entgegengesetzten Richtung von Geräten der Gebäudesystemtechnik, insbesondere von Sensoren, ausgelöste Ereignisse umsetzt in Schalt- und/oder Steuerfunktionen, welche von Geräten des Türkommunikationssystems auszuführen sind.

In Ausgestaltung der Erfindung legt das Programmier-Interface für die Konfiguration des direkten Zusammenspiels zwischen Geräten des Türkommunikationssystems und Geräten der Gebäudesystemtechnik die Abfolgen fest,
• welche Ereignisse bei Geräten der Gebäudesystemtechnik Funktionen bei Geräten des Türkommunikationssystems auslösen und in welcher Weise diese auszulösenden Funktionen im Detail auszuführen sind und
• welche Ereignisse bei Geräten des Türkommunikationssystems Funktionen bei Geräten der Gebäudesystemtechnik auslösen und in welcher Weise diese auszulösenden Funktionen im Detail auszuführen sind.

Die mit der Erfindung erzielbaren Vorteile bestehen insbesondere
• in der universellen Kombinationsmöglichkeit von Ereignissen der Gebäudesystemtechnik mit Ereignissen des Türkommunikationssystems - ohne jede Einschränkungen,
• in der Möglichkeit der Programmierung von bedingten Abhängigkeiten der beiden miteinander verknüpften Kommunikationstechniken, d. h. der Gebäudesystemtechnik und des Türkommunikationssystems.

Durch die Integration des Gebäudesystemtechnik-Interface in die Zentraleinheit des Türkommunikationssystems und durch die Wahl geeigneter Protokolle können sowohl Funktionen der Türstation(en) als auch der Wohnungsstation(en) durch Ereignisse auf der Seite der Gebäudesystemtechnik ausgelöst werden. Gleichzeitig besteht die Möglichkeit, auch Ereignisse auf der Seite der Gebäudesystemtechnik vom Türkommunikationssystem aus in gewünschter, programmierbarer Weise anzustoßen.

Die Erfindung wird nachstehend an Hand der in der Zeichnung dargestellten Ausführungsbeispiele näher erläutert. Es zeigen:
- Fig. 1: ein prinzipielles Schaltbild zur Verknüpfung mindestens einer Türstation, mindestens einer Wohnungsstation sowie Aktoren und/oder Sensoren der Gebäudesystemtechnik über eine Zentraleinheit eines Türkommunikationssystems,
- Fig. 2: ein Ausführungsbeispiel mit einer an einem Steuergerät der Gebäudesystemtechnik angeschlossenen Musikanlage,
- Fig. 3: ein Ausführungsbeispiel mit an einem Aktor der Gebäudesystemtechnik angeschlossener Treppenhausbeleuchtung / Außenbeleuchtung,
- Fig. 4: ein Ausführungsbeispiel mit einer in der Gebäudesystemtechnik integrierten Schaltuhr,
- Fig. 5: ein Ausführungsbeispiel mit einem in der Gebäudesystemtechnik integrierten Bewegungsmelder.

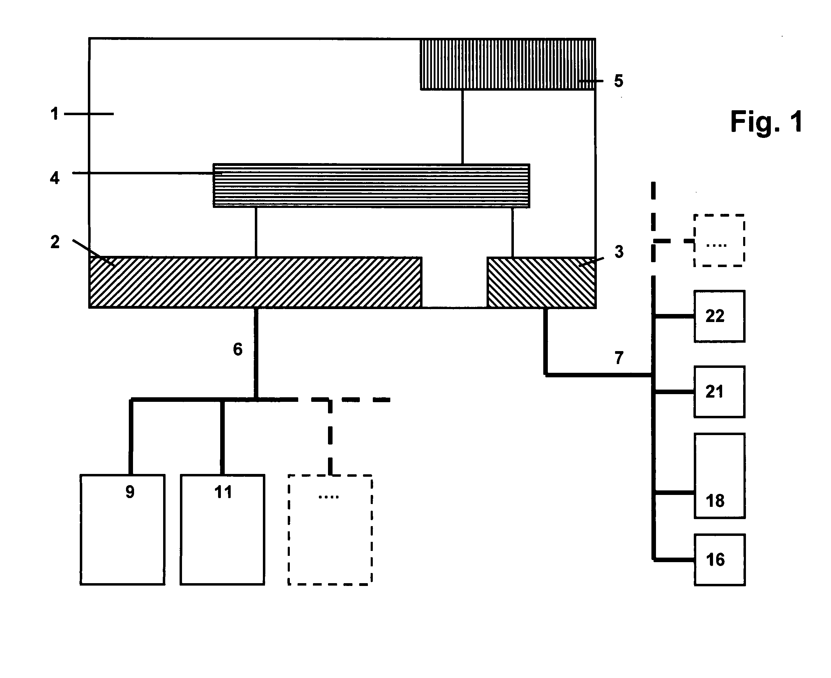

In Fig. 1 ist ein prinzipielles Schaltbild zur Verknüpfung mindestens einer Türstation, mindestens einer Wohnungsstation sowie Aktoren und/oder Sensoren der Gebäudesystemtechnik über eine Zentraleinheit eines Türkommunikationssystems dargestellt. Es ist eine Zentraleinheit 1 eines Türkommunikationssystems zu erkennen, welche
- ein Türkommunikationssystem-Interface 2 (Schnittstelle),
- ein Gebäudesystemtechnik-Interface (GST-Interface, Schnittstelle) 3,
- eine programmierbare Auswertelogik 4,
- ein Programmier-Interface 5 (Schnittstelle)
aufweist.

An das Türkommunikationssystem-Interface 2 sind als Geräte dieses Türkommunikationssystems mindestens eine Türstation 9 und mindestens eine Wohnungsstation 11 über einen Türkommunikationssystem-Bus 6 angeschlossen. An das Türkommunikationssystem-Interface 2 respektive den Türkommunikationssystem-Bus 6 können selbstverständlich beliebig viele weitere Türstationen und/oder Wohnungsstationen angeschlossen werden, was gestrichelt skizziert ist.

An das Gebäudesystemtechnik-Interface (GST-Interface) 3 sind als Geräte der Gebäudesystemtechnik mehrere Aktoren und/oder Sensoren (Schalt- oder Steuergeräte) der Gebäudesystemtechnik respektive GST-Geräte 16, 18, 21, 22, wie z. B. Schaltaktoren oder Bewegungsmelder über einen Gebäudesystemtechnik-Bus (GST-Bus) 7 angeschlossen.

Die Integration des Gebäudesystemtechnik-Interface 3 und der programmierbaren Auswertelogik 4 in die Zentraleinheit 1 des Türkommunikationssystems ist von großer Wichtigkeit. Dazu wird die zentrale Einheit, beispielsweise die Spannungsversorgungseinheit, des Türkommunikationssystems um eine entsprechende physikalische Schnittstelle erweitert und es wird ein passender Protokollstapel respektive Protokollstack implementiert. Die programmierbare Auswertelogik 4 kann eigenständig Steuer- und Schaltfunktionen vornehmen und
• setzt in der einen Richtung von Geräten des Türkommunikationssystems ausgelöste Ereignisse um in Schalt- und/oder Steuerfunktionen, welche von Geräten der Gebäudesystemtechnik, insbesondere Aktoren, auszuführen sind,
• setzt in der entgegengesetzten Richtung von Geräten der Gebäudesystemtechnik, insbesondere von Sensoren, ausgelöste Ereignisse um in Schalt- und/oder Steuerfunktionen welche von Geräten des Türkommunikationssystems auszuführen sind.

Unter einem Protokollstapel respektive Protokollstack versteht man allgemein in der Datenübertragung eine konzeptionelle Architektur von Netzprotokollen, wobei die einzelnen Protokolle als fortlaufend nummerierte Schichten (layers) eines Stapels (stacks) übereinander angeordnet sind. Jede Schicht benutzt dabei zur Erfüllung ihrer speziellen Aufgabe eine jeweils tiefere Schicht im Protokollstapel.

Nachfolgend einige Beispiele zur Erläuterung der vielfältigen, durch die Erfindung geschaffenen Möglichkeiten:

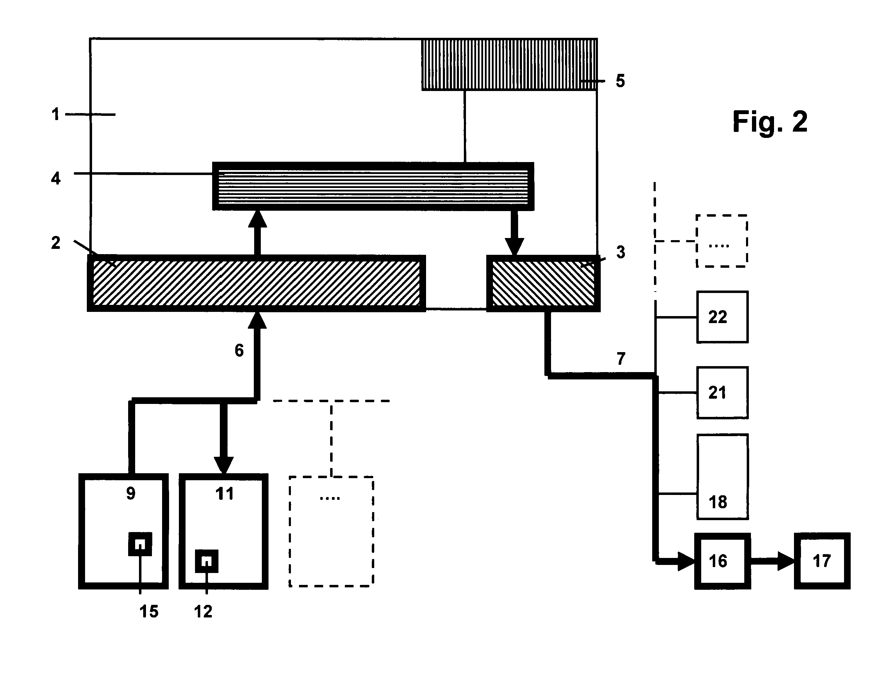

In Fig. 2 ist ein Ausführungsbeispiel mit einer an einem Steuergerät der Gebäudesystemtechnik angeschlossenen Musikanlage dargestellt. Ein Besucher klingelt an der Haustür, d. h. er betätigt einen Klingelknopf 15 der Türstation 9. Damit der Bewohner das Klingeln einer Türklingel 12 der Wohnungsstation 11 nicht überhört, wird die Lautstärke einer in Betrieb befindlichen Musikanlage 17 automatisch heruntergefahren. Hierzu ist die Musikanlage 17 an das Steuergerät 16 der Gebäudesystemtechnik angeschlossen. Das Türklingel-Ansteuersignal (Telegramm) gelangt über den Türkommunikationssystem-Bus 6 nicht nur zur Wohnungsstation 11, sondern auch über das Türkommunikationssystem-Interface 2, die programmierbare Auswertelogik 4, das Gebäudesystemtechnik-Interface 3 und den Gebäudesystemtechnik-Bus 7 zum Steuergerät 16, welches das Herunterfahren der Musikanlage 17 in der programmierten Weise bewirkt.

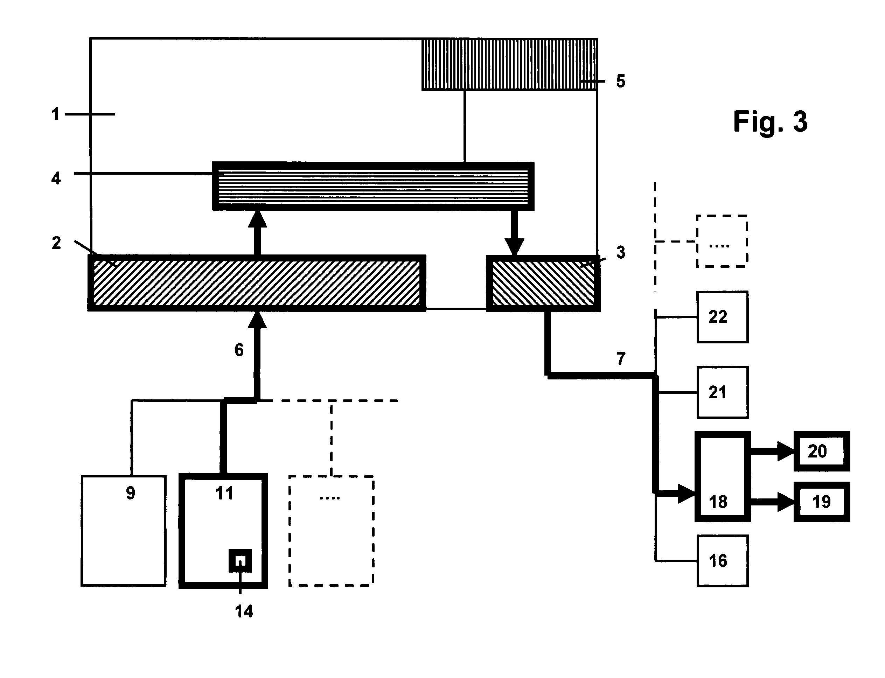

In Fig. 3 ist ein Ausführungsbeispiel mit an einem Aktor (Schaltgerät) der Gebäudesystemtechnik angeschlossener Treppenhausbeleuchtung / Außenbeleuchtung dargestellt. Beim Verlassen des Hauses drückt der Bewohner eine Abwesenheitstaste 14 der Wohnungsstation 11. Dadurch wird die Treppenhausbeleuchtung / Außenbeleuchtung automatisch aktiviert / eingeschaltet, aber alle anderen (bzw. vorab festgelegte) Lichtquellen der Wohnung werden automatisch abgeschaltet. Hierzu sind die Treppenhaus-Beleuchtung / Außenbeleuchtung 19 und alle (bzw. die vorab festgelegten) Lichtquellen (oder andere elektrische Verbraucher bzw. steuerbare Funktionen) 20 der Wohnung an den Schaltaktor 18 der Gebäudesystemtechnik angeschlossen. Das Abwesenheits-Ansteuersignal (Telegramm) gelangt über den Türkommunikationssystem-Bus 6, das Türkommunikationssystem-Interface 2, die programmierbare Auswertelogik 4, das Gebäudesystemtechnik-Interface 3 und den Gebäudesystemtechnik-Bus 7 zum Schaltaktor 18, welcher die Treppenhausbeleuchtung / Außenbeleuchtung 19 einschaltet und alle (bzw. die vorab festgelegten) Lichtquellen / Verbraucher / Funktionen 20 der Wohnung ausschaltet.

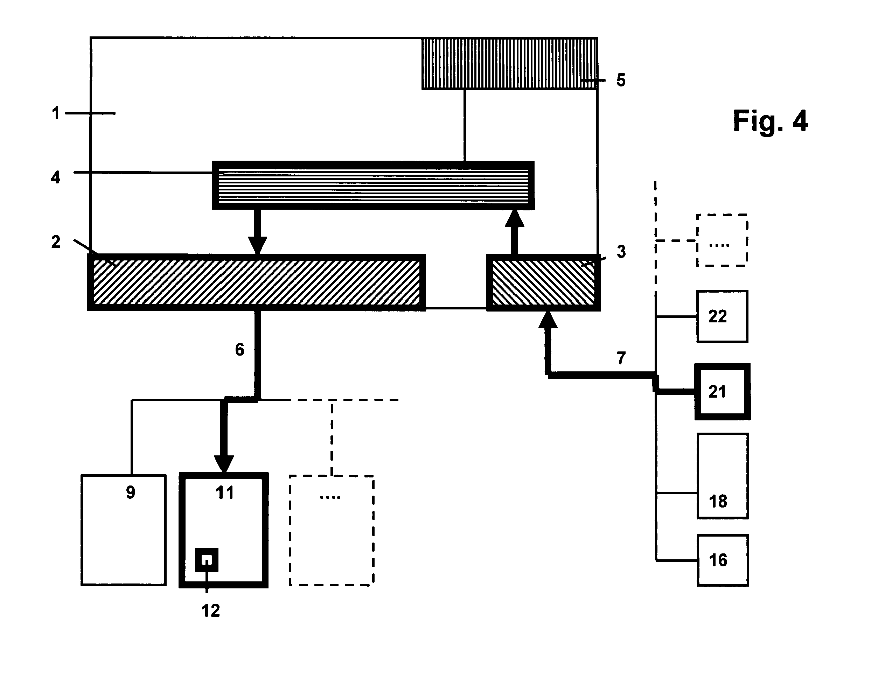

In Fig. 4 ist ein Ausführungsbeispiel mit einer in der Gebäudesystemtechnik integrierten Schaltuhr dargestellt. Die Schaltuhr 21 sendet zu einer programmierbaren Zeit ein Signal (Telegramm) "Nachtruhe-Beginn". Am Morgen wird die Nachtruhe durch ein Signal (Telegramm) "Nachtruhe-Ende" der integrierten Schaltuhr 21 beendet. Diese Schaltuhr-Signale (Telegramme) gelangen über den Gebäudesystemtechnik-Bus 7, das Gebäudesystemtechnik-Interface 3, die programmierbare Auswertelogik 4, das Türkommunikationssystem-Interface 2 und den Türkommunikationssystem-Bus 6 zur Wohnungsstation 11 und schalten dort die Türklingel 12 automatisch während der durch die beiden Schaltuhr-Signale (Telegramme) "Nachtruhe-Beginn" und "Nachtruhe-Ende" definierten Zeitspanne ab (Stummschaltung).

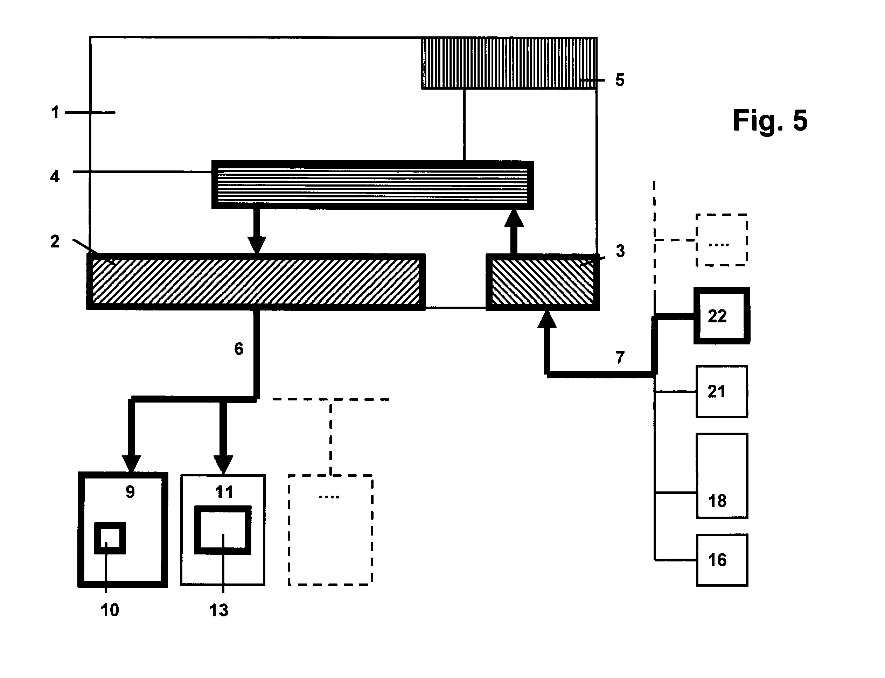

In Fig. 5 ist ein Ausführungsbeispiel mit einem Bewegungsmelder der Gebäudesystemtechnik dargestellt. Der im Außenbereich in die Gebäudesystemtechnik integrierte Bewegungsmelder löst aufgrund einer Bewegung ein Detektions-Signal (Telegramm) aus, welches über den Gebäudesystemtechnik-Bus 7, das Gebäudesystemtechnik-Interface 3, die programmierbare Auswertelogik 4, das Türkommunikationssystem-Interface 2 und den Türkommunikationssystem-Bus 6 zur Türstation 9 gelangt, wodurch automatisch das Einschalten einer Kamera 10 der Türstation 9 bewirkt wird, um auf diese Weise möglicherweise unerwünschte Besucher aufzunehmen. Nach der Aktivierung der Kamera 10 erfolgt über den Türkommunikationssystem-Bus 6 zusätzlich die Aktivierung eines Displays 13 der Wohnungsstation 11, um die Aufnahmen der Kamera 10 verfolgen zu können.

Das Programmier-Interface 5 ist eine für die Konfiguration des direkten Zusammenspiels zwischen Türkommunikationssystem und Gebäudesystemtechnik wichtige Baukomponente. Unter Einsatz des Programmier-Interfaces 5 werden die Abfolgen festgelegt,
- welche Ereignisse respektive Vorfälle, Begebenheiten auf der Seite der Gebäudesystemtechnik Funktionen beim Türkommunikationssystem auslösen und in welcher Weise diese auszulösenden Funktionen im Detail auszuführen sind,
- welche Ereignisse respektive Vorfälle, Begebenheiten auf der Seite des Türkommunikationssystems Funktionen bei der Gebäudesystemtechnik auslösen und in welcher Weise diese auszulösenden Funktionen im Detail auszuführen sind.

### Bezugszeichenliste

- 1: Zentraleinheit des Türkommunikationssystems
- 2: Türkommunikationssystem-Interface (Schnittstelle)
- 3: Gebäudesystemtechnik-Interface (GST-Interface, Schnittstelle)
- 4: programmierbare Auswertelogik
- 5: Programmier-Interface (Schnittstelle)
- 6: Türkommunikationssystem-Bus
- 7: Gebäudesystemtechnik-Bus (GST-Bus)
- 8: -
- 9: Türstation
- 10: Kamera
- 11: Wohnungsstation
- 12: Türklingel
- 13: Display
- 14: Abwesenheitstaste
- 15: Klingelknopf
- 16: Aktor und/oder Sensor der Gebäudesystemtechnik = GST-Gerät
- 17: Musikanlage
- 18: Aktor oder Sensor der Gebäudesystemtechnik, z. B. Schaltaktor
- 19: Treppenhausbeleuchtung / Außenbeleuchtung
- 20: Lichtquellen / Verbraucher / Funktionen
- 21: Aktor oder Sensor der Gebäudesystemtechnik, z. B. Schaltuhr
- 22: Aktor oder Sensor der Gebäudesystemtechnik, z. B. Bewegungsmelder

## Patentansprüche

1. Zentraleinheit (1) eines Türkommunikationssystems,
• mit einem Türkommunikationssystem-Interface (2) zum Anschluss von Geräten (9, 11) des Türkommunikationssystems, wie mindestens einer Türstation (9) und mindestens einer Wohnungsstation (11), über einen Türkommunikationssystem-Bus (6),
• mit einem Gebäudesystemtechnik-Interface (3) zum Anschluss von Geräten (16, 18, 21, 22) der Gebäudesystemtechnik, wie Aktoren und/oder Sensoren, über einen Gebäudesystemtechnik-Bus (7),
• mit einer sowohl mit dem Türkommunikationssystem-Interface (2) als auch mit dem Gebäudesystemtechnik-Interface (3) verbundenen programmierbaren Auswertelogik (4),
• und mit einem mit der programmierbaren Auswertelogik (4) verbundenen Programmier-Interface (5),
• wobei die programmierbare Auswertelogik (4) eigenständig Steuer- und Schaltfunktionen vornimmt und
• in der einen Richtung von Geräten (9, 11) des Türkommunikationssystems ausgelöste Ereignisse umsetzt in Schalt- und/oder Steuerfunktionen, welche von Geräten (16, 18, 21, 22) der Gebäudesystemtechnik, insbesondere Aktoren, auszuführen sind,
• in der entgegengesetzten Richtung von Geräten (16, 18, 21, 22) der Gebäudesystemtechnik, insbesondere von Sensoren, ausgelöste Ereignisse umsetzt in Schalt- und/oder Steuerfunktionen, welche von Geräten (9, 11) des Türkommunikationssystems auszuführen sind.

2. Zentraleinheit (1) nach Anspruch 1, **dadurch gekennzeichnet, dass** über das Programmier-Interface (5) für die Konfiguration des direkten Zusammenspiels zwischen Geräten (9, 11) des Türkommunikationssystems und Geräten (16, 18, 21, 22) der Gebäudesystemtechnik die Abfolgen festgelegt werden,
• welche Ereignisse bei Geräten (16, 18, 21, 22) der Gebäudesystemtechnik Funktionen bei Geräten (9, 11) des Türkommunikationssystems auslösen und in welcher Weise diese auszulösenden Funktionen im Detail auszuführen sind und
• welche Ereignisse bei Geräten (9, 11) des Türkommunikationssystems Funktionen bei Geräten (16, 18, 21, 22) der Gebäudesystemtechnik auslösen und in welcher Weise diese auszulösenden Funktionen im Detail auszuführen sind.
